# EUROPÄISCHE PATENTSCHRIFT

(11) **EP 1 954 389 B1**
(45) Veröffentlichungstag und Bekanntmachung des Hinweises auf die Patenterteilung: **11.03.2009**
(21) Anmeldenummer: 06806328.8
(22) Anmeldetag: 17.10.2006
(51) Int. Cl.: B01J 19/12, F16L 55/28

(54) **STRAHLUNGSQUELLE ZUR BESTRAHLUNG VON INNENWÄNDEN LANGGESTRECKTER HOHLRÄUME**
RADIATION SOURCE FOR IRRADIATING INNER WALLS OF ELONGATED CAVITIES
SOURCE DE RAYONNEMENT POUR L'IRRADIATION DES PAROIS INTERNES DE CAVITES ALLONGEES

(30) Priorität: 16.11.2005 DE 102005054970
(43) Veröffentlichungstag der Anmeldung: 13.08.2008
(73) Patentinhaber: Brandenburger Patentverwertung GdbR., 76829 Landau (DE)
(72) Erfinder: BETZ, Wilhelm, Leo, 76887 Bad Bergzabern (DE)
(74) Vertreter: Kesselhut, Wolf
(86) Internationale Anmeldenummer: PCT/EP2006/009994
(87) Internationale Veröffentlichungsnummer: WO 2007/057082

(56) Entgegenhaltungen:
- WO-A-98/17939
- DE-A1- 19 527 316
- DE-U1- 20 012 893
- DE-U1- 29 812 835

## Beschreibung

Die Erfindung betrifft eine Strahlungsquelle zur Bestrahlung von Innenwänden lang gestreckter Hohlräume gemäß dem Oberbegriff von Anspruch 1.

Strahlungsquellen zur Bestrahlung der Innenwände von langgestreckten Hohlräume werden dazu eingesetzt, bei der Sanierung von Rohrleitungs- und Kanalsystemen die aus einem Kunstharz-Laminat gefertigten Auskleidungsschläuche (Liner) mittels UV-Licht zu härten, nachdem die Liner in die Innenräume der zu sanierenden Rohrleitung eingezogen und beispielsweise mittels Pressluft expandiert wurden.

Aus der DE 200 12 893 U1 ist eine gattungsgemäße Strahlungsquelle bekannt, die einen Grundkörper besitzt, der mehrere über Stangen und Kugelgelenke miteinander gekoppelte Module aufweist, an denen jeweils Räder und UV-Lichtquellen angeordnet sind. Die Räder sind in radialer Richtung beweglich an zugehörigen Teleskoparmen aufgenommen und werden nach dem Einbringen der Strahlungsquelle in den Liner durch Entfernen eines Sperrbolzens mit Hilfe eines Bowdenzuges durch zugeordnete Druckfedern in radialer Richtung nach außen zur Innenwand hin ausgefahren, bevor die Strahlungsquelle zum Aushärten des mittels UV-Licht härtbaren Kunstharz-Laminats durch den Innenraum des Liners gezogen wird. Bei der beschriebenen Strahlungsquelle werden die Räder infolge der beim Zusammenfahren stark zunehmenden Federkraft beim Bestrahlen von Hohlräumen kleinen Durchmessers mit einer hohen Kraft beaufschlagt, wohingegen die auf die Räder wirkende Kraft bei großen Durchmessern der Hohlräume und weit ausgefahrenen Armen vergleichsweise klein ist.

Ein weiteres Problem besteht bei Strahlungsquellen der zuvor beschriebenen Art mit sich lediglich über Federn abstützenden Armen darin, dass die Arme schlagartig ungedämpft auseinander fahren und mit großer Wucht an die Innenwand des zu bestrahlenden Liners schlagen, wenn die Sperrbolzen zum Expandieren der im zusammengefahrenen Zustand in den Liner eingebrachten Strahlungsquelle entfernt werden.

Weiterhin wurde von der Anmelderin beim Hindurchziehen einer Strahlungsquelle der zuvor beschriebenen Art mit verschwenkbaren, sich lediglich über Spiraldruckfedern abstützenden Armen beobachtet, dass die unteren Arme bei hoher Zugbelastung zum Einknicken neigen, insbesondere dann, wenn die Arme mit den daran aufgenommenen Rädern weit ausgefahren sind, und der Hohlraum/Kanal im Bodenbereich Stufen aufweist, die z.B. durch Verwerfungen hervorgerufen werden. Hierdurch besteht die Gefahr, dass der besonders empfindliche Innenfolienschlauch des Liners beim Einziehen der Strahlungsquelle beschädigt wird, wenn Teile des Grundkörpers der Strahlungsquelle nach dem Einknicken der Arme den Bodenbereich des Liners kontaktieren.

Demgemäß ist es eine Aufgabe der vorliegenden Erfindung, eine Strahlungsquelle zu schaffen, die einfach aufgebaut ist, und bei der die Räder auch bei unterschiedlichen Durchmessern der zu bestrahlenden Hohlräume mit einer vergleichsweise konstanten Kraft an der Innenwand des jeweiligen Hohlraums anliegen.

Diese Aufgabe wird erfindungsgemäß durch die Merkmale von Anspruch 1 gelöst.

Weitere Merkmale der Erfindung sind in den Unteransprüchen beschrieben.

Gemäß der Erfindung umfasst eine Strahlungsquelle zur Bestrahlung der Innenwände von langgestreckten Hohlräumen, wie sie zum Aushärten von in Kanäle eingezogenen Linern mittels UV- oder IR-Strahlung zum Einsatz gelangt, einen Grundkörper, an dem eine Lichtquelle in Form einer oder mehrerer UV- oder IR-Lampen aufgenommen ist. Der Grundkörper selber, der beispielsweise ein langgestrecktes Rohr sein kann, in dessen Innenraum die elektrischen Zuleitungen zur Versorgung der Lampen verlaufen, ist mit mehreren, an unterschiedlichen Umfangspositionen angeordneten Rädern versehen, die zum Führen der Strahlungsquelle, bzw. des Grundkörpers innerhalb des Hohlraums dienen, und die jeweils am relativ zum Grundkörper verfahrbaren Armen aufgenommen sind, welch letztere aus einer ersten radial innenliegenden Position in eine zweite radial außenliegende Position bewegbar sind.

Die Strahlungsquelle zeichnet sich dadurch aus, dass jedem Arm wenigstens eine Gasdruckfeder zugeordnet ist, welche den Arm aus der ersten radial innenliegenden Position in die zweite radial außenliegende Position drängt.

Durch den Einsatz einer Gasdruckfeder anstelle der im Stand der Technik üblicherweise eingesetzten Spiraldruckfedern ergibt sich der Vorteil, dass infolge der vergleichsweise flachen Federkennlinie von Gasdruckfedern die Anpresskraft, mit der die Räder an die Innenwand des Liners angepresst werden, bei kleinen Änderungen im Durchmesser des zu bestrahlenden Hohlraums oder bei Unebenheiten im Innenraum eines Kanals ebenfalls im Wesentlichen konstant ist. Hierdurch wird sichergestellt, dass jedes der Räder mit im Wesentlichen der gleichen Andruckkraft an die Innenwand angestellt wird, wodurch sich eine optimale Zentrierung des Grundkörpers innerhalb des Hohlraumes während des Bestrahlungsvorgangs ergibt.

Bei der bevorzugten Ausführungsform der Erfindung sind die Arme zweigeteilt ausgestaltet, wozu jeder Arm einen gestellfest mit dem Grundkörper verbundenen, und sich von diesem weg erstreckenden ersten Teilabschnitt sowie einen mit diesem über ein Gelenk verbundenen zweiten Teilabschnitt umfasst. Die Gasdruckfeder ist hierbei mit ihrem ersten Ende mit dem ersten Teilabschnitt, und mit ihrem zweiten, bevorzugt kolbenstangenseitigen Ende, mit dem zweiten Teilabschnitt verbunden, wobei die Drehachse der gelenkigen Verbindung von erstem und zweitem Teilabschnitt bevorzugt parallel zur Drehachse des zugeordneten Rades verläuft.

Gemäß einer weiteren vorteilhaften Ausgestaltung der erfindungsgemäßen Strahlungsquelle besitzt die Gasdruckfeder eine solche Länge und ist mit ihrem ersten und ihrem zweiten Ende in einem solchen Abstand vom Drehpunkt des Gelenks entfernt an dem ersten, bzw. am zweiten Teilabschnitt befestigt, dass die Gasdruckfeder in ihrer vollständig zusammengefahrenen Stellung, d. h. in der ersten radial innenliegenden Position, als Anschlag wirkt, der ein weiteres Verschwenken des zweiten Teilabschnitts gegenüber dem ersten Teilabschnitt wirkungsvoll verhindert. Hierdurch ergibt sich der Vorteil, dass der Grundkörper, bzw. die Lichtquelle selbst im Falle eines Einknickens eines Armes nicht mit dem Liner in Kontakt gelangen können, so dass die Gefahr einer Beschädigung der in Linern üblicherweise eingesetzten Innenfolienschläuche ohne zusätzlichen Vorrichtungsaufwand zuverlässig vermieden wird.

Nach einem weiteren, der Erfindung zugrunde liegenden Gedanken ist jedem Arm der Strahlungsquelle eine Arretiereinrichtung zugeordnet, welche den Arm in der ersten radial innenliegenden Position gegen ein Verschwenken in die zweite radial außenliegende Position sperrt.

Hierbei ist im Falle der bevorzugt eingesetzten Ausführungsform mit einem einen ersten und zweiten Teilabschnitt aufweisenden Arm die Arretiereinrichtung in vorteilhafter Weise am ersten, gestellfest mit dem Grundkörper verbundenen Teilabschnitt des Arms angeordnet und weist einen Schwenkhebel auf, an dessen Spitze beispielsweise ein Vorsprung gebildet ist, der mit einem am zweiten Teilabschnitt des Arms vorgesehenen Anschlag zusammenwirkt, derart, dass durch die federelastische Kraft der Gasdruckfeder das dem Anschlag zugewandte Ende des Schwenkhebels in Richtung zum ersten Teilabschnitt hin, bzw. zum Gelenk hin gedrängt wird, so dass der Schwenkhebel durch die Kraft der Gasdruckfeder selbständig arretiert wird und die Arretierwirkung erst durch einen Druck auf das gegenüberliegende Ende desselben aufgehoben wird.

Diese Ausführungsform der Erfindung bietet den Vorteil, dass bevorzugt alle Arme der Strahlungsquelle vor dem Einziehen der Strahlungsquelle außerhalb des Kanals durch Verschwenken der zweiten Teilabschnitte entgegen der Kräfte der Gasdruckfedern von Hand in die erste Position verschwenkt werden können, und die Strahlungsquelle anschließend im zusammengefahrenen Zustand bequem in den zu bestrahlenden Hohlraum eingeführt werden kann. Nachdem vorzugsweise die gesamte Strahlungsquelle vollständig in den Hohlraum eingeführt ist, können die Arme durch einen Druck auf die jeweils zweiten Enden der Schwenkhebel sukzessive expandiert werden.

Beim Expandieren der Strahlungsquelle ergibt sich durch den Einsatz der erfindungsgemäßen Gasdruckfedern der zusätzliche Vorteil, dass die Arme, bzw. die zweiten Teilabschnitte, aufgrund der Dämpfungswirkung der Gasdruckfedern ebenfalls gedämpft in die zweite radial außenliegende Stellung bewegt und in Anlage mit der Innenwand des zu bestrahlenden Hohlraums gebracht werden, wodurch die Gefahr von Beschädigungen des Liners oder des darin enthaltenen empfindlichen Innenfolienschlauchs wirksam verringert wird.

Nach einer weiteren Ausführungsform der Erfindung sind jeweils zwei Gasdruckfedern paarweise auf einander gegenüberliegenden Seiten eines jeden Arms angeordnet, wodurch in vorteilhafter Weise eine gleichmäßige beidseitige Krafteinleitung der von den beiden Gasdruckfedern erzeugten Kräfte in den jeweiligen Arm, bzw. den zweiten Teilabschnitt erfolgt. Hierdurch kann eine einseitige Drehmomentbeaufschlagung der Arme, die im Falle von lediglich einer Feder durch die in der axialen Richtung des Grundkörpers wirkende Komponente der Federkraft hervorgerufen wird, kompensiert werden, so dass ein Verwinden der Arme wirksam verhindert wird, und die Räder stets in der vorgegebenen Spur laufen.

Ein weiterer Vorteil dieser Ausführungsform der Erfindung besteht darin, dass die Gasdruckfedern kleiner dimensioniert werden können, und dass hierdurch der zur Verfügung stehende seitliche Bauraum besser ausgenutzt wird.

Die Erfindung wird nachfolgend mit Bezug auf die Zeichnungen anhand einer bevorzugten Ausführungsform beschrieben.

In den Zeichnungen zeigen:
- Fig. 1: eine schematische Teildarstellung einer in einen Innenhohlraum eingeführten Strahlungsquelle im zusammengefahrenen Zustand vor dem Expandieren,
- Fig. 2a: eine schematische seitliche Darstellung eines einen ersten und einen zweiten Teilabschnitt umfassenden Armes in der vollständig ausgefahrenen zweiten Position,
- Fig. 2b: den Arm von Fig. 2a in der zusammengefahrenen radial innenliegenden ersten Position, und
- Fig. 3: eine schematische Ansicht der Unterseite des Arms von Fig. 2a und 2b.

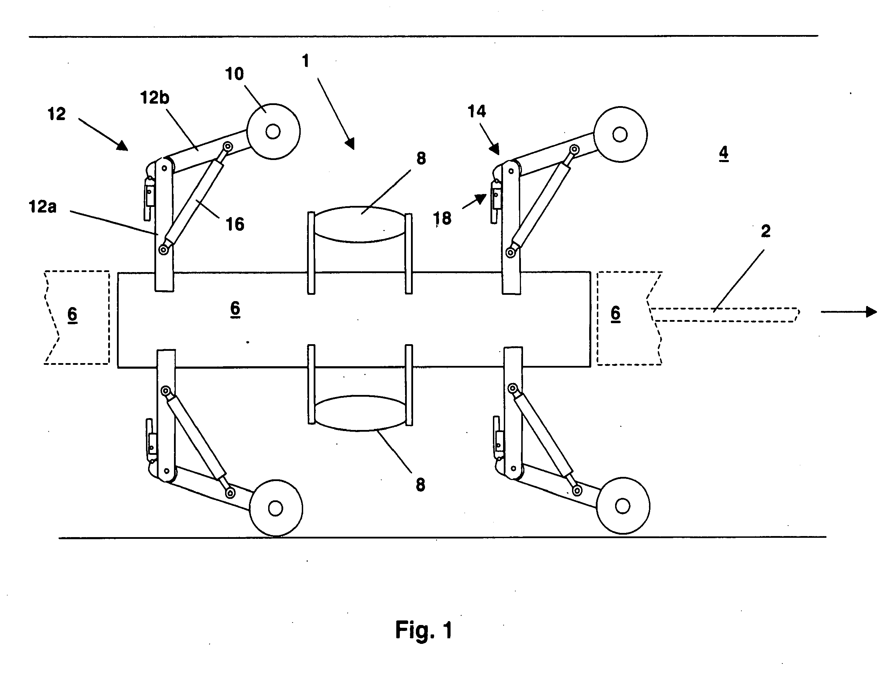

Wie in Fig. 1 gezeigt ist, umfasst eine erfindungsgemäße Strahlungsquelle 1, die über ein schematisch angedeutetes Zugseil 2 in einen langgestreckten Hohlraum 4 eingezogen wird, einen Grundkörper 6, an dem Lichtquellen in Form von UV- oder IR-Lampen 8 aufgenommen sind, die das Licht zur Bestrahlung der Innenwände des langgestreckten Hohlraums 4 erzeugen.

Wie der Darstellung von Fig. 1 weiterhin entnommen werden kann, ist der Grundkörper 6 bevorzugt modular aufgebaut, was durch die in Fig. 1 in gestrichelten Linien angedeuteten weiteren Module zum Ausdruck gebracht wird.

Am Grundkörper 6, der die Form eines langgestreckten Rohres aufweisen kann, sind Räder 10 an zugeordneten Armen 12 aufgenommen, von denen ein jeder Arm 12 einen ersten, fest mit dem Grundkörper 6 verbundenen Teilarm oder Teilabschnitt 12a sowie einen an diesem über ein Gelenk 14 um eine nicht näher bezeichnete Drehachse in einer Ebene verschwenkbar angeordneten zweiten Teilarm oder zweiten Teilabschnitt 12b aufweist.

Gemäß der Darstellung von Fig. 1 weist jeder Arm 12 wenigstens eine Gasdruckfeder 16 auf, die mit ihrem ersten zylinderseitigen Ende drehbeweglich am ersten Teilabschnit 12a und mit ihrem zweiten, kolbenstangenseitigen Abschnitt am zweiten Teilabschnitt 12b, bevorzugt nahe dem Rad 10, befestigt ist.

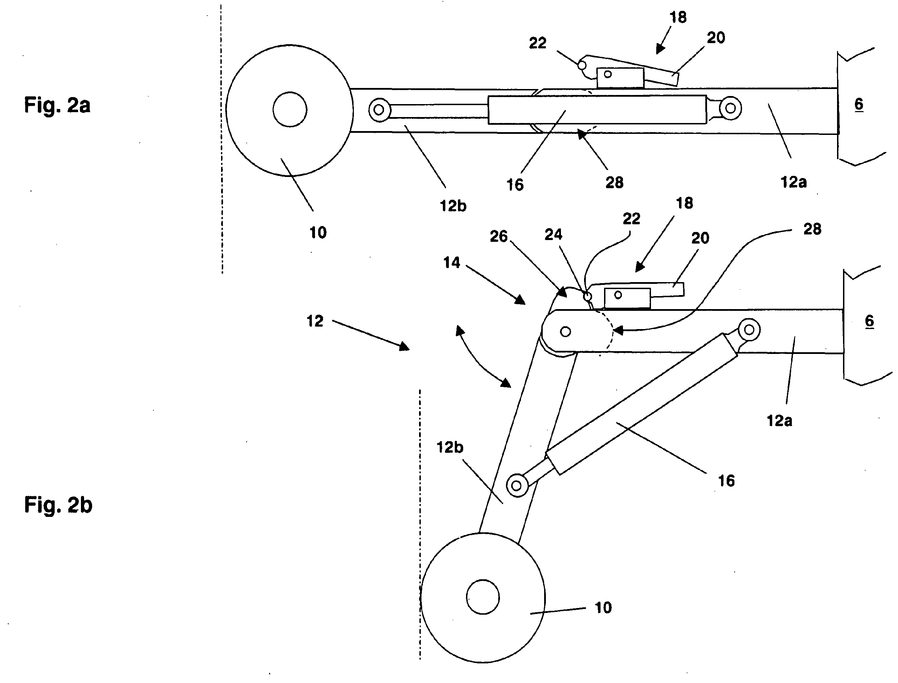

Die Gasdruckfeder 16 beaufschlagt den Arm 12, bzw. den zweiten Teilabschnitt 12b mit einer federelastischen Kraft, die den Arm, bzw. den zweiten Teilabschnitt 12b aus der in Fig. 1 gezeigten radial innenliegenden ersten Position - die dem zusammengefahrenen, nicht expandierten Zustand der Strahlungsquelle 1 entspricht, in welchem diese bevorzugt in den Hohlraum 4 eingeführt wird - in die in Fig. 2a gezeigte radial außenliegende Position verschwenkt, in der die Räder 10 der Strahlungsquelle an der Innenwand des Hohlraums 4 anliegen.

Wie der Darstellung von Fig. 2a und 2b weiterhin im Detail entnommen werden kann, ist jedem Arm 12 bevorzugt eine Arretiereinrichtung 18 zugeordnet, die einen am ersten Teilabschnitt 12a um eine nicht näher bezeichnete Schwenkachse verschwenkbar aufgenommenen Schwenkhebel 20 umfasst, an dessen dem Drehgelenk 14 zugewandten Ende ein Vorsprung oder eine Nase 22 geformt ist, die mit einem am zweiten Teilabschnitt 12b vorgesehenen Anschlag 24 zusammenwirkt.

Der Anschlag 24 ist dabei gemäß der Darstellung von Fig. 2b bevorzugt an einem sich von der Drehachse des Gelenks 14 aus in Richtung zum Grundkörper 6 hin erstreckenden Anschlags-Abschnitt 26 geformt, und besitzt z.B. die Form einer Einkerbung mit rechwinklig zueinander verlaufenden Kanten.

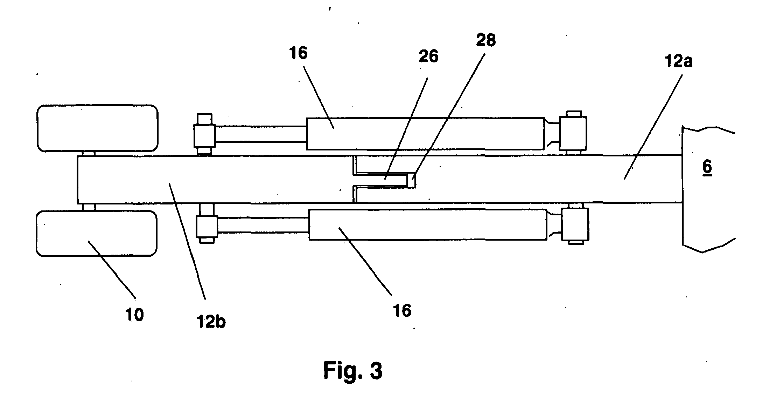

Wie in Fig. 3 weiterhin angedeutet ist, weist der Anschlags-Abschnitt 26 bevorzugt eine gegenüber der Breite des ersten oder zweiten Teilarms 12a, 12b reduzierte Breite auf, und erstreckt sich in eine im ersten Teilabschnitt 12a geformte zentrale Ausnehmung 28 hinein, welche am gelenkseitigen Ende des ersten Teilabschnitts 12a in diesem geformt ist.

Gemäß der Darstellung von Fig. 2b wird der Anschlag 24 durch die von der Gasdruckfeder 16 auf den zweiten Teilabschnitt 12b ausgeübte Kraft gegen den Vorsprung bzw. die Nase 22 des Schwenkhebels 20 gedrängt, der sich wiederum auf der Außenseite des ersten Teilabschnitts 12a abstützt und dadurch eine Weiterbewegung des Anschlags 24 - und damit des zweiten Teilabschnitts 12b - in selbst hemmender Weise verhindert.

Um die zuvor beschriebene Arretierung des zweiten Teilabschnitt 12b in der in Fig. 2b gezeigten ersten zusammengefahrenen radialen Position der erfindungsgemäßen Strahlungsquelle aufzuheben, wird der Schenkhebel 20 durch einen Druck auf das dem Grundkörper 6 zugewandte Ende des Schwenkhebels - wie durch den Pfeil in Fig. 2a angedeutet - in die in Fig. 2a gezeigte Position verschwenkt, wodurch der Vorsprung oder die Nase 22, die auch als Stift ausgeführt sein kann, vom Gelenk 14 weg über den Anschlags-Abschnitt 26 hinaus bewegt wird, so dass der zweite Teilabschnitt 12b durch die Kraft der Gasdruckfeder 16 in der gleichen Richtung wie der Schwenkhebel 20 - in Fig. 2a, 2b im Uhrzeigersinn - gedämpft in die Position von Fig. 2a verschwenkt wird.

Wie schließlich in Fig. 3 gezeigt ist, können gemäß einer weiteren Ausführungsform der erfindungsgemäßen Strahlungsquelle jedem Arm 12 zwei Gasdruckfedern 16 zugeordnet sein, die bevorzugt identisch ausgebildet sind, und die - in axialer Richtung des Grundkörpers 6 betrachtet- paarweise auf einander gegenüberliegenden Seiten eines jeden Arms angeordnet sind.

## Patentansprüche

1. Strahlungsquelle (1) zur Bestrahlung von Innenwänden langgestreckter Hohlräume (4), insbesondere zur Aushärtung strahlungshärtbarer Kunstharz-Laminate mittels UV- oder IR-Strahlung, mit einem wenigstens eine Lichtquelle (8) aufweisenden Grundkörper(6), an dem mehrere Räder (10) zum Führen des Grundkörpers (6) innerhalb des Hohlraums in radialer Richtung relativ zum Grundkörper (6) bewegbar an Armen (12) aufgenommen sind, wobei jedem Arm (12) wenigstens eine Gasdruckfeder (16) zugeordnet ist, welche den Arm (12) aus einer radial innenliegenden ersten Position in eine radial außen liegende zweite Position drängt,
**dadurch gekennzeichnet, dass**
jeder Arm einen gestellfest mit dem Grundkörper (6) verbundenen und sich von diesem weg erstreckenden ersten Teilabschnitt (12a) und einen gelenkig mit dem ersten Teilabschnitt (12a) verbundenen zweiten Teilabschnitt (12b) aufweist, und dass die Gasdruckfeder (16) mit ihrem einen Ende am ersten Teilabschnitt (12a) und mit ihrem zweiten Ende am zweiten Teilabschnitt (12b) aufgenommen ist.

2. Strahlungsquelle nach einem der vorhergehenden Ansprüche,
**dadurch gekennzeichnet, dass**
die Gasdruckfeder (16) im eingefahrenen Zustand als Anschlag wirkt, der eine weitere Schwenkbewegung des Arms (12) in Richtung zum Grundkörper (6) über die erste radial innenliegende Position hinaus hin verhindert.

3. Strahlungsquelle nach einem der vorhergehenden Ansprüche,
**dadurch gekennzeichnet,dass**
jedem Arm (12) eine Arretiereinrichtung (18) zugeordnet ist, welche den Arm (12) in der ersten radial innenliegenden Position gegen ein Verschwenken in die zweite radial außen liegende Position sperrt.

4. Strahlungsquelle nach Anspruch 3,
**dadurch gekennzeichnet, dass**
die Arretiereinrichtung (18) einen am ersten Teilabschnitt (12a) des Arms (12) verschwenkbar aufgenommenen Schwenkhebel (20) umfasst, der mit einem am zweiten Teilabschnitt (12b) des Arms vorgesehenen Anschlag (24) zusammenwirkt.

5. Strahlungsquelle nach einem der vorhergehenden Ansprüche,
**dadurch gekennzeichnet, dass**
jedem Arm (12) zwei Gasdruckfedern (16) zugeordnet sind.

6. Strahlungsquellen nach Anspruch 5,
**dadurch gekennzeichnet, dass**
die Gasdruckfedern (16) paarweise seitlich auf einander gegenüberliegenden Seiten eines jeden Arms (12) angeordnet sind.

## Claims

1. Radiation source (1) for irradiating inner walls of elongate cavities (4), in particular for using UV or IR radiation to cure synthetic resin laminates which can be radiation hardened, comprising a base body (6) which has at least one light source (8) and on which a plurality of wheels (10) are held movably in the radial direction relative to the base body (6) by arms (12), for guiding the base body (6) inside the elongated cavity, at least one gas pressure spring (16) being assigned to each arm (12) and urging the arm (12) from a radially inward first position into a radially outward second position, **characterised in that** each arm has a first portion (12a) which is rigidly mounted on the base body (6) and extends away from it and a second portion (12b) which is articulated to the first portion (12a), and **in that** the gas pressure spring (16) has one end connected to the first portion (12a) and the other end connected to the second portion (12b).

2. Radiation source according to any one of the preceding claims, **characterised in that** the gas pressure spring (16), in the retracted state thereof, acts as a stop which prevents a further swivelling motion of the arm (12) towards the base body (6) beyond the first, radially inward position.

3. Radiation source according to any one of the preceding claims, **characterised in that** an arresting device (18) is assigned to each arm (12) and locks the arm (12) in the first, radially inward position against pivoting into the second, radially outward position.

4. Radiation source according to claim 3, **characterised in that** the arresting device (18) comprises a pivoting lever (20) which is held pivotally on the first portion (12a) of the arm (12) and cooperates with a stop (24) provided on the second portion (12b) of the arm.

5. Radiation source according to any one of the preceding claims, **characterised in that** two gas pressure springs (16) are assigned to each arm (12).

6. Radiation source according to claim 5, **characterised in that** the gas pressure springs (16) are arranged laterally in pairs on opposite sides of each arm (12).

## Revendications

1. Source de rayonnement (1) pour irradier des parois internes de cavités allongées (4), en particulier pour durcir des stratifiés en résine artificielle durcissables par irradiation au moyen d'un rayonnement UV ou IR, avec un corps de base (6) présentant au moins une source lumineuse (8), sur lequel plusieurs roues (10) sont fixées de façon mobile à des bras (12) pour guider le corps de base (6) à l'intérieur de la cavité dans la direction radiale par rapport au corps de base (6), au moins un ressort à gaz (16) étant associé à chaque bras (12), lequel ressort pousse le bras (12) à partir d'une première position radialement intérieure dans une deuxième position radialement extérieure,
**caractérisée en ce que**,
chaque bras présente une première section partielle (12a) liée solidairement au corps de base (6) et s'étendant loin de celui-ci et une deuxième section partielle (12b) liée de façon articulée à la première section partielle (12a), et que le ressort à gaz (16) est fixé à la première section partielle (12a) par l'une de ses extrémités et par sa deuxième extrémité à la deuxième section partielle (12b).

2. Source de rayonnement selon l'une quelconque des revendications précédentes, **caractérisée en ce que**
le ressort à gaz (16) à l'état rentré agit comme une butée, qui empêche un mouvement supplémentaire de pivotement du bras (12) dans la direction du corps de base (6) passant par la première position radialement intérieure.

3. Source de rayonnement selon l'une quelconque des revendications précédentes,
**caractérisée en ce que**,
un dispositif d'arrêt (18) est associé à chaque bras (12), bloquant le bras (12) dans la première position radialement intérieure contre un pivotement dans la deuxième position radialement extérieure.

4. Source de rayonnement selon la revendication 3,
**caractérisée en ce que**,
le dispositif d'arrêt (18) comprend un levier de pivotement (20) fixé de manière pivotable à la première section partielle (12a) du bras (12), levier agissant de concert avec une butée (24) prévue sur la deuxième section partielle (12b) du bras.

5. Source de rayonnement selon l'une quelconque des revendications précédentes,
**caractérisée en ce que**,
deux ressorts à gaz (16) sont associés à chaque bras (12).

6. Sources de rayonnement selon la revendication 5,
**caractérisée en ce que**,
les ressorts à gaz (16) sont disposés latéralement par paire sur les côtés opposés l'un à l'autre de chaque bras (12).
